(19) Europäisches Patentamt
European Patent Office
Office européen des brevets

(11) Publication number: 0 312 376
A2

(12) # EUROPEAN PATENT APPLICATION

(21) Application number: 88309633.1

(22) Date of filing: 14.10.88

(51) Int. Cl.4: B 01 D 13/00
B 01 D 13/04

(30) Priority: 14.10.87 US 108818 30.08.88 US 237046

(43) Date of publication of application:
19.04.89 Bulletin 89/16

(84) Designated Contracting States:
BE DE ES FR GB IT NL

(71) Applicant: Exxon Research and Engineering Company
P.O.Box 390 180 Park Avenue
Florham Park New Jersey 07932 (US)

(72) Inventor: Schucker, Robert Charles
10821 Goodwood Boulevard
Baton Rouge Louisiana 70815 (US)

(74) Representative: Somers, Harold Arnold et al
ESSO Engineering (Europe) Ltd. Patents & Licences
Apex Tower High Street
New Malden Surrey KT3 4DJ (GB)

(54) **Polyurea membrane and its use for aromatics/non-aromatics separations.**

(57) Membranes made from polyurea polymer are efficient aromatic/non-aromatic separation membranes. They may be used under pervaporation or perstraction conditions. Such separations are particularly useful for naphtha upgrading and in the chemicals industry.

EP 0 312 376 A2

**Description**

## POLYUREA MEMBRANE AND ITS USE FOR AROMATICS/NON-AROMATICS SEPARATIONS

The present invention relates to a polyurea membrane and its use for aromatics/non-aromatics separations.

An aromatic, non-porous membrane for use in aromatics/non-aromatics separation is disclosed which membrane is made of polyurea polymer. Such aromatic polyurea polymer membranes are utilized under pervaporation or perstraction conditions.

BACKGROUND OF THE INVENTION

The use of membranes to separate aromatics from saturates has long been pursued by the scientific and industrial community and is the subject of numerous patents.

U.S. Patent 3,370,102 describes a general process for separating a feed into a permeate stream and a retentate stream and utilizes a sweep liquid to remove the permeate from the face of the membrane to thereby maintain the concentration gradient driving force. The process can be used to separate a wide variety of mixtures including various petroleum fractions, naphthas, oils, hydrocarbon mixtures. Expressly recited is the separation of aromatics from kerosene.

U.S. Patent 2,958,656 teaches the separation of hydrocarbons by type, i.e. aromatic, unsaturated, saturated, by permeating a portion of the mixture through a non-porous cellulose ether membrane and removing permeate from the permeate side of the membrane using a sweep gas or liquid. Feeds include hydrocarbon mixtures, naphtha (including virgin naphtha, naphtha from thermal or catalytic cracking, etc.).

U.S. Patent 2,930,754 teaches a method for separating hydrocarbons e.g. aromatic and/or olefins from gasoline boiling range mixtures, by the selective permeation of the aromatic through certain cellulose ester non-porous membranes. The permeated hydrocarbons are continuously removed form the permeate zone using a sweep gas or liquid.

U.S. Patent 4,115,465 teaches the use of polyurethane membranes to selectively separate aromatics from saturates via pervaporation.

DETAILED DESCRIPTION OF THE INVENTION

An aromatic polyurea polymer membrane is described which is useful for the separation of aromatics from non-aromatics, especially under pervaporative or perstractive conditions. The aromatic/non-aromatic separation is particularly useful in naphtha upgrading and in the chemicals industry.

The aromatic polyurea polymer membrane is prepared from the corresponding aromatic polyurea -polymer which is itself prepared by techniques known in the art using standard starting materials. Therefore, the polyurea polymer may be prepared by reacting together aliphatic, alkylaromatic or aromatic diisocyanates or polyisocyanates with diamines or polyamines. Similarly aliphatic, alkylaromatic or aromatic carboxylic acids can be reacted with the aliphatic, alkylaromatic or aromatic diisocyanates or polyisocyanates to produce the polyurea polymer. Furthermore, amine terminated polyols can be reacted with diisocyanates to produce polyurea polymers which can be used to produce membranes. When employing this technique to produce polyurea polymers the polyol can be either a polyether or a polyester. Polyesters of low molecular weight (e.g. about 200 to 2000 MW) are preferred. Low molecular weight is important to insure maximum aromatic carbon content which is for the most part governed by the aromaticity of the isocyanate used. Mixtures of the aforesaid materials can be used to produce a complex polyurea polymer mixture.

The total aromatic carbon content of the resulting polyurea polymer should be about 10 to 86%, preferably about 35 to 75%, most preferably about 50 to 75%. This is so since polyurea polymers with very high aromatic carbon content tend to be extremely glassy rather than elastomeric in nature and in the practice of the present invention it is desirable for the polyurea membrane to be somewhat elastomeric in nature at the temperatures employed in the aromatic/non-aromatic separation process. Polyurea polymer membranes having an aromatic carbon content of about 50% are much more selective for aromatics-non-aromatics separations than are polyurea polymer membranes of lower carbon content.

Preferably a solvent is utilized so as to facilitate membrane casting. Typical of solvents which can be employed are dimethylformamide and dimethyl sulfoxide. Other solvents are familiar to those conversant with urea chemistry.

The diisocyanates are preferably aromatic diisocyanates having the general structure:

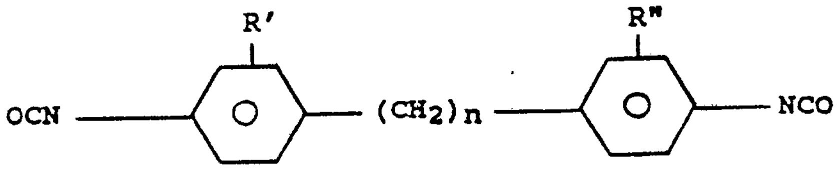

I

wherein R′ and R″ are the same or different and are selected from the group consisting of H, $C_1$-$C_5$ and $C_6H_5$ and n ranges from 0 to 4.

Diamine useful in the production of urea polymers have the general formula $H_2NRNH_2$ where R includes aliphatic and aromatic moieties such as

$--(CH_2)_n--$ (II)

where n is 1 to 10.

Also included are diamines of the formula:

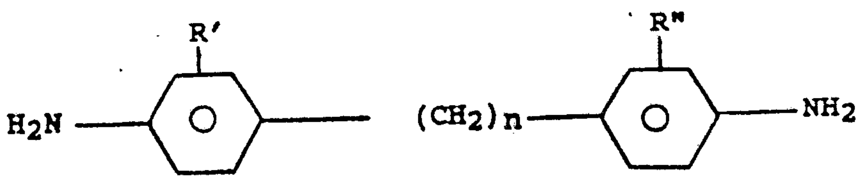

III

where R′ and R″ are the same or different and are selected from the group consisting of H or a $C_1$ to $C_5$ or $C_6H_5$ and n ranges from 0 to 4.

Aliphatic diisocyanates which may be utilized are exemplified by hexamethylene diisocyanate (HDI), 1,6-diisocyanato-2,2,4,4-tetramethylhexane (TMDI), 1,4-cyclohexanyl diisocyanate (CHDI), isophorone diisocyanate (IPDI) while useful alkyl-aromatic diisocyanates are exemplified by toluene diisocyanate (TDI) and bitolylene diisocyanate (TODI). Aromatic diisocyanates are exemplified by 4,4′-diisocyanato-diphenylmethane (MDI). Polyisocyanates are exemplified by polymeric MDI (PMDI) and Isonate 143L which is a carbodiimide modified MDI. Useful polyamines are exemplified by polyethyleneimine and 2,2′,2″ triaminotriethylamine.

The above are presented solely by way of example. Those skilled in the art, with the present teaching before them, can select from the innumerable materials available the various starting materials which upon combination as described herein will produce a polyurea polymer useful in the production of selective membranes.

The polyurea polymer produced will generally have a molecular weight ranging from about 30,000 to about 150,000, preferably about 50,000 to about 100,000. The maximum molecular weight in reality is set by the necessity of dissolving the polyurea polymer in a solvent in order to facilitate membrane fabrication. Since the higher molecular weight polymers are more difficult to dissolve in any given solvent system, solvation is typically augmented by the application of heat. However, since it is a desirable characteristic of these polyurea membranes that they be temperature resistant, it is also generally true that the higher molecular weight polymers are preferred for the production of membranes.

Thus, it is apparent that a compromise must be struck regarding polymer molecular weight. The polymer must not be high in molecular weight that it becomes soluble in solvents and thus uncastable into membranes, yet its molecular weight must be high enough so that the membrane which is cast exhibits stability at elevated temperatures. One solution to this dilemma is to employ a lower molecular weight polymer during the casting procedure and subsequently increasing the molecular weight of polymer once the membrane has been fabricated. The molecular weight of the polymer in the membrane can be increased by a post crosslinking procedure.

Post crosslinking, crosslinking practiced after the polyurea membrane has been produced, can be accomplished by employing thermal or chemical means familiar to the art. Chemical crosslinking can be accomplished by using formaldehyde or by adding additional isocyanates, techniques familiar to those skilled in the art.

Membrane thermal stability is also affected by the degree of aromaticity of the polymer and by the degree of

hydrogen bonding. However, since polymer aromaticity is generally set at the time of polymerization and twice high aromaticity produces a membrane of a glassy nature, it is apparent that the simplest way in which to produce high temperature stable membranes involves the post crosslinking step.

As previously stated, the membranes are produced by preparing the corresponding polyurea polymer in an appropriate solvent, such as dimethyl formamide (DMF), to produce a pourable or spreadable solution. The casting solution typically has a polymer concentration of between about 10 to about 25 wt%, preferably about 15 to about 20 wt%. The solution is then poured or spread (using a doctor knife) on an appropriate support medium, such as a metal or glass plate of, if desired, a woven fiber backing, such as woven fiber glass, nylon, polyester, etc., but preferably non-woven backings, such as porous polypropylene or porous teflon are used. Backing materials employed are those which are not attacked by the solvent used to produce the polyurea polymer solution.

The membrane may be cast in any thickness, membranes ranging in thickness of from about 0.1 to about 50 microns being preferred.

Alternatively a very thin layer of the polyurea polymer can be deposited on a highly permeable, non-selective polyurethane layer producing a composite membrane comprising a thin dense layer of polyurea membrane about 0.1 to 5 microns thick on a permeable, non-selective, polyurethane backing. The layer of polyurethane (about 20 to 100 microns thick) serves as a support layer permitting one to produce thin, dense, selective layers of polyurea which would otherwise be mechanically unmanageable due to their thinness. Due to the chemical similarity between the polyurethane support layer and the polyurea selective layer, the two layers interact through hydrogen bonding to produce a very strong adhesion.

In using this technique to produce sheet material, the thick, permeable polyurethane layer can be deposited on a suitable backing material such as porous fiber glass, polyethylene, polypropylene, nylon, teflon, etc. after which the thin, dense selective polyurea layer would be deposited onto the polyurethane layer. Suitable polyurethane support layer can be produced using the polymers and techniques outlined in U.S. Patent 4,15,465.

In producing hollow fibers or tubes using this composite membrane technique, first a tube or fiber of permeable polyurethane is produced after which a thin dense layer of the selective polyurea/urethane material is deposited on either the outer or inner surface of the tube of fiber support.

Due to the thinness of the dense selective polyurea layer the composite membrane exhibits high flux while maintaining a very high degree of selectivity.

The solvent is permitted to evaporate with the application of heat or vacuum if needed to drive off the solvent. If a solvent of a low enough vapor pressure is employed the application of heat can be omitted.

Thin film composite membranes of polyurea can also be prepared by suspension dispersion deposition as taught in copending application U.S. Serial Number 108,819, filed October 14, 1987 in the name of Robert C. Schucker. (U.S. Serial Number 108,819 is equivalent to our copending European patent application entitled "Method of Preparing Thin Film Composite Membranes by Suspension Deposition, and European patent application.)

In USSN 108,819, the thin film composite membrane constituting a thin layer of polymer deposited on a thick-permeable support layer is produced by preparing a fine dispersion of discrete polyurea polymer particles in a solvent which does not react with or dissolve the selected thick-permeable support layer. The dispersion is contacted with only one face of the support layer. The solvent is permitted to evaporate and the composite membrane results. The support layer will generally have pores ranging from 0.005 to 0.5 microns. Typical supports include polyamide, polyimide, polyacrylonitrile, polybenzimidazole, teflon cellulose acetate and polyolefines such as polyethylene and polypropylene.

The suspension is deposited as a thin layer (about 2 microns or less) on the support structure. Polymer concentration in the suspension-dispersion can range from about 0.5 to about 10%, preferably about 1 to about 5%, most preferably about 2%. Non-dissolving solvents are 1,4-dioxane, cellosolve acetate, tetrahydrofuran, ketones (e.g. acetone) and aromatic solvents such as toluene or xylenes.

The membranes are useful for the separation of aromatics from saturates in petroleum and chemical streams particularly for the separation of large substituted aromatics from saturates as are encountered in heavy cat naphtha streams. Other aromatics containing streams which can be feed to the separation process of the present invention include intermediate cat naphtha boiling in the 200-320°F range, light aromatics/saturates streams boiling in the $C_5$-300°F range, light cat cycle oil boiling in the 400-650°F range as well as streams containing benzene, toluene, xylenes or other aromatics normally encountered in chemical plant processes. The separation techniques which may successfully employ the membranes of the present invention include perstraction and pervaporation.

Perstraction involves the selective dissolution of particular components contained in a mixture into the membrane, the diffusion of those components through the membrane and the removal of the diffused components from the downstream side of the membrane by use of a liquid sweep stream. In the perstractive separation of aromatics from saturates in petroleum or chemical streams (particularly heavy cat naphtha streams) the aromatic molecules present in the feed-stream dissolve into the membrane film due to similari ties between the membrane solubility parameter and those of the aromatic species in the feed. The aromatics then permeate (diffuse) through the membrane and are swept away by a sweep liquid which is low in aromatics content. This keeps the concentration of aromatics at the permeate side of the membrane film low and maintains the concentration gradient which is responsible for the permeation of the aromatics through the

membrane.

The sweep liquid is low in aromatics content so as not to itself decrease the concentration gradient. The sweep liquid is preferably a saturated hydrocarbon liquid with a boiling point much lower or much higher than that of the permeated aromatics. This is to facilitate separation, as by simple distillation. Suitable sweep liquids, therefore, would include, for example, $C_3$ to $C_6$ saturated hydrocarbons and lube base-stocks ($C_{15}$-$C_{20}$).

The perstraction process is run at any convenient temperature, preferably as low as possible.

The choice of pressure is not critical since the perstraction process is not dependent on pressure, but on the ability of the aromatic components in the feed to dissolve into and migrate through the membrane under a concentration driving force. Consequently, any convenient pressure may be employed, the lower the better to avoid rupture of the membrane.

If $C_3$ or $C_4$ sweep liquids are used at 25° C or above in liquid state, the pressure must be increased to keep in liquid phase.

Pervaporation, by comparison, is run at generally higher temperatures than perstraction and relies on vacuum on the permeate side to evaporate the permeate from the surface of the membrane and maintain the concentration gradient driving force which drives the separation process. As in perstraction the aromatic molecules present in the feed dissolve into the membrane film, migrate through said film and re-emerge on the permeate side under the influence of a concentration gradient. Pervaporation separation of aromatics from saturates can be performed at a temperature of about 25° C for the separation of benzene from hexane but for separation of heavier aromatics/saturate mixtures, such as naphtha and heavy cat naphtha, higher temperature of at least 80° C and higher, preferably at least 100° C and higher, more preferably 120° C and higher should be used, the maximum upper limit being that temperature at which the membrane is physically damaged. Vacuum on the order of 1-50 mm Hg is pulled on the permeate side. The vacuum stream containing the permeate is cooled to condense out the highly aromatic permeate. Condensation temperature should be below the dew point of the permeate at a given vacuum level.

The membrane itself may be in any convenient form utilizing any convenient module design. Thus, sheets of membrane material may be used in spiral wound or plate and frame permeation cell modules. Tubes and hollow fibers of membranes may be used in bundled configurations with either the feed or the sweep liquid (or vacuum) in the internal space of the tube or fiber, the other material or condition obviously being on the other side.

Most conveniently, the membrane is used in a hollow fiber configuration with the feed introduced on the exterior side of the fiber, the sweep liquid or vacuum being on the inside of the hollow fiber to sweep away the permeated highly aromatic species, thereby maintaining the desired concentration gradient. The sweep liquid, along with the aromatics contained therein, is passed to separation means, typically distillation means, however, if a sweep liquid of low enough molecular weight is used, such as liquefied propane or butane, the sweep liquid can be permitted to simply evaporate, the liquid aromatics being recovered and the gaseous propane or butane (for example) being recovered and reliquefied by application of pressure or lowering of temperature.

The present invention will be better understood by reference to the following Examples which are offered by way of illustration and not limitation.

Example 1

Dissolve 1.98 grams (0.01) 4, 4′-diamino-diphenylmethane in 20 ml of dimethylformamide in a 100 ml flask equipped with a stirrer and a drying tube. To that solution is added a solution comprised of 2.50 grams (0.01 mole) 4,4′-diisocyanato-diphenylmethane in 20 ml dimethylformamide with stirring. The reaction is exothermic and rapid. The resulting viscous solution of poly[methylene bis(4-phenyl urea)] can be cast onto a glass plate and dried in either a vacuum oven at 60-80° C or a convection oven at 100° C overnight. The film can be then be used as a membrane for aromatic/saturate separation in pervaporation or perstraction.

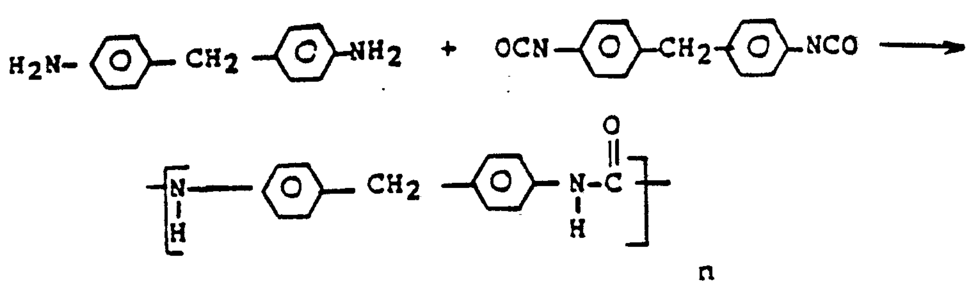

Example 2

Dissolve 1.22 grams (0.01 mole) dry benzoic acid in 30 ml anhydrous dimethylsulfoxide. Add 2.5 grams (0.01 mole) 4,4′-diisocyanato-diphenylmethane as a solid and stir. Carbon dioxide gas is produced and the reaction is exothermic. When gas evolution has slowed, warm the reaction to 50° C and maintain at 50° C for three hours while stirring. Cast the solution into a film on a glass plate and dry in a vacuum oven at 60-80° C overnight. The film can then be used as a membrane for aromatic/saturate separation in pervaporation or perstraction.

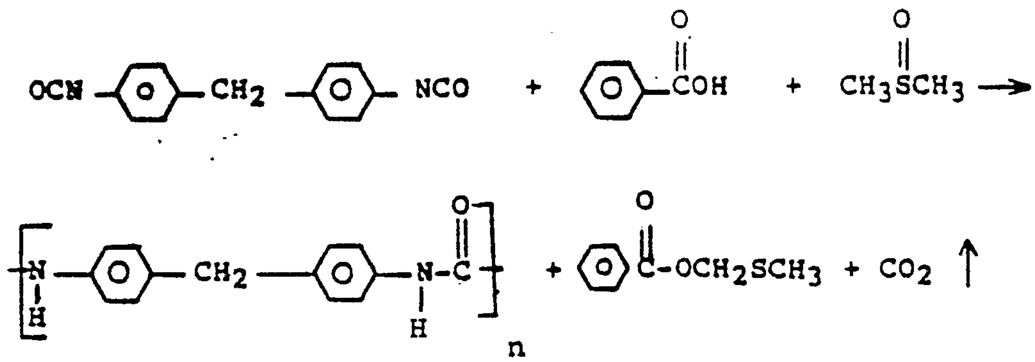

Example 3

Seven point one (7.1) grams (approximately 0.0087 mole) of the diamine shown below (Texaco DU-700) were dissolved in 7.3 grams of dimethylformamide. To this was added 1.91 grams (0.011 mole) toluene diisocyanate with stirring. The mixture was allowed to stir at room temperature overnight and was subsequently cast into a film on Celgard® porous polypropylene using a 5 mil casting knife. It was dried in air at room temperature overnight and was used in that form for permeation studies.

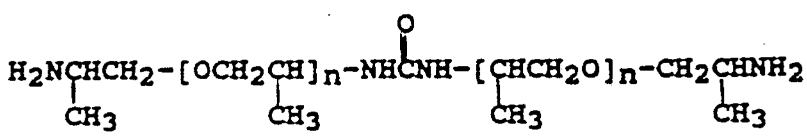

where $n = 5.6$

The aromatic carbon content of this material was 14.6 mole %.

Permeation was measured by perstraction of a model feed mixture containing 14.9 wt.% p-xylene, 27.9 wt.% mesitylene, 13.0 wt.% 1-decene and 44.2 wt.% n-decane. The experiment was carried out at 50° C using n-heptane as the sweep fluid. Results of this experiment are shown in Table 1.

Table 1

Perstraction with a Polyurea Membrane

| | |
|---|---|
| Flux ($kg/m^2/d$) | 1.2 |
| Selectivity (vs. n-decane) to | |
| p-xylene | 4.61 |
| mesitylene | 2.09 |
| 1-decene | 1.22 |

Therefore the membrane is selective for the separation of aromatic hydrocarbons from aliphatic hydrocarbons.

Example 4

Approximately 0.025 mole (10.25 grams) BAPP whose structure is shown below and 0.025 mole of the diamine used in Example 1 were dissolved into 92.25 grams of dimethylformamide to make a 25 wt.% solution. To this was added 0.05 mole (12.5 grams) methylene diisocyanate (MDI) dissolved in 37.5 grams DMF. The solution was stirred for 2 hours at room temperature and cast into a film on release paper using a 10 mil casting knife. The membrane was dried for 0.5 hour at 100° C and evaluated by perstraction using the same model feed used in Example 1 but at a somewhat more elevated temperature of 75° C.

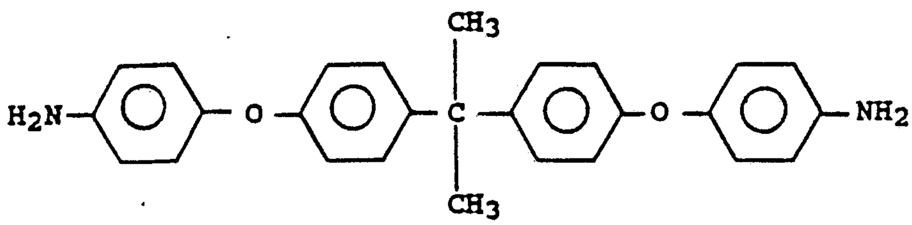

The aromatic carbon content of this polymer is approximately 49 mole %.

Results of that testing are shown in Table 2.

Table 2

Perstraction with a Polyurea Membrane

| | |
|---|---|
| Flux ($kg/m^2/d$) | 0.647 |
| Selectivity (vs. n-decane) to | |
| p-xylene | 7.9 |
| mesitylene | 2.7 |
| 1-decene | 1.4 |

As can be seen, this membrane is more selective than the one having the lower aromatic carbon content.

Example 3

The membrane from Example 2 was used to separate toluene from isooctane (50% toluene by volume and 50% isooctane by volume) by pervaporation at 100° C and 1 mm Hg vacuum. Results from that test are shown below in Table 3.

Table 3

Pervaporation with a Polyurea Membrane

| | |
|---|---|
| Flux ($kg/m^2/d$) | 10.1 |
| Selectivity (vs. n-decane) to | |
| Toluene | 20.6 |

As can be seen, this membrane is even more selective in pervaporation separation of the light components that it was in the perstractive separation of the heavier ones.

**Claims**

1. A method for separating aromatic hydrocarbons from mixtures of aromatic and non-aromatic hydrocarbons which method comprising selectively permeating the aromatic component of the mixture through a highly aromatic non-porous polyurea membrane.
2. The method of claim 1 wherein the permeation is conducted under pervaporation conditions.
3. The method of claim 1 wherein the permeation is conducted under perstraction conditions.

4. The method of claim 1 or claim 2 wherein the aromatic carbon content of the polyurea polymer making up the polyurea membrane is in the range of from about 10 to 86%.

5. The method of any one of claims 1 to 4 wherein the aromatic non-porous polyurea membrane comprises a layer of polyurea polymer deposited on a highly permeable non-selective layer of polyurethane.

6. The method of claim 5 wherein the layer of polyurea polymer is from about 0.1 to 5 microns (μm) thick.

7. An aromatic non-porous polyurea membrane for use in separating aromatics from mixtures or aromatics and non-aromatics wherein the total aromatic carbon content of the polyurea membrane is in the range of from about 10 to 86%.

8. The membrane of claim 7 wherein the total aromatic carbon content of the polyurea membrane is in the range of from about 50 to 75%.

9. The membrane of claim 7 or claim 8 wherein the aromatic non-porous polyurea membrane comprises a layer of polyurea polymer deposited on a highly permeable non-selective layer of polyurethane.

10. The membrane of claim 9 wherein the layer of polyurea polymer is from about 0.1 to 5 microns (μm) thick.